# EUROPEAN PATENT SPECIFICATION

(11) **EP 2 393 072 B1**
(45) Date of publication and mention of the grant of the patent: **20.03.2013**
(21) Application number: 11168274.6
(22) Date of filing: 31.05.2011
(51) Int. Cl.: G08B 17/10, H01H 35/02, H01H 35/14

(54) **Smoke detection system**
Raucherkennungssystem
Système de détection de fumée

(30) Priority: 03.06.2010 GB 201009357
(43) Date of publication of application: 07.12.2011
(73) Proprietor: Kidde Technologies, Inc., Wilson, NC 27896 (US)
(72) Inventor: Rennie, Paul, Bracknell Berkshire RG12 0TS (GB); Jones, Beth A., Hook Hampshire RG27 9SU (GB)
(74) Representative: Leckey, David Herbert

(56) References cited:
- WO-A1-2007/135423
- GB-A- 2 262 444
- US-A- 5 486 811

## Description

### BACKGROUND

The present disclosure relates to a smoke detector system.

Various approaches provide fire suppression within aircraft areas such as cargo bays, lavatories, crew rest areas, electronic bays, wheel wells and other areas.

These approaches include passive systems for which no detection equipment is required and active systems which require detection systems that produce a signal that will activate a fire suppression system.

US-A-5486811 discloses a fire detection and extinguishment system which may include a smoke detector and an oygen sensor.

### SUMMARY

From a first aspect the present invention provides a smoke detector system as set forth in claim 1.

The present invention also provides a fire suppressant system as set forth in claim 10.

The present invention also provides a method of smoke detection as set forth in claim 14.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a top view of an aircraft having a cargo bay system according to the present disclosure; and
Figure 2 is a schematic diagram of a smoke detector system with an integral oxygen sensor.

### DETAILED DESCRIPTION

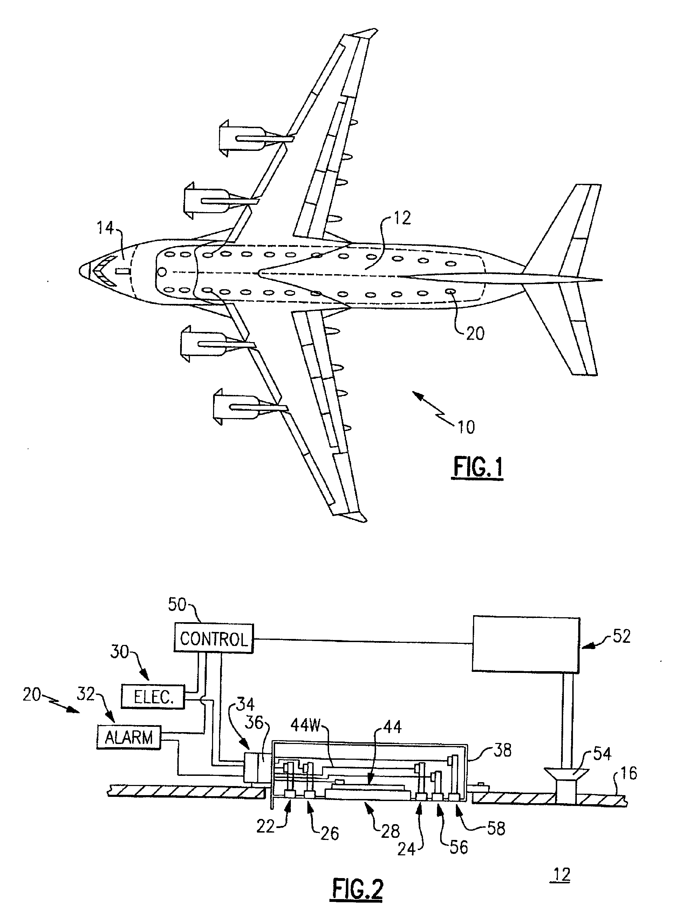

Figure 1 schematically illustrates an exemplary aircraft 10 generally having a cargo bay 12 and a cockpit area 14. Although a particular aircraft configuration is illustrated and described in the disclosed embodiment, other configurations and/or machines such as rotary-wing aircraft, ships and ground vehicles with cargo bays, lavatories, crew rest areas, electronic bays, wheel wells, fuel cells or other areas will also benefit herefrom.

The cargo bay 12 includes a cargo bay liner 1 G to which is mounted at least one smoke detector system 20. It should by understood that the cargo bay liner 1 G as utilized herein may be any surface within the cargo bay 12 to which a light or smoke detector is conventionally mounted and that the location of the cargo bay liner 16 disclosed in the illustrated non-1imiting embodiment is schematic.

With reference to Figure 2, the smoke detector system 20 integrates an oxygen sensor 22, a smoke detector sensor 26, and optionally a pressure sensor 24 within a single unit which provides smoke identification throughout the cargo bay 12. The smoke detector system 20 may further include a light source 28 such that the smoke detector system 20 may be mounted within the cargo bay liner 16 to which a light unit is conventionally mounted.

Each smoke detector system 20 communicates with an aircraft electrical system 30 and alert system 32 (illustrated schematically) through a common electrical interface 34 to facilitate integration within the cargo bay 12. The common electrical interface 34 in one non-limiting embodiment includes a connector plug 36 6 which facilitate direct installation to the pre-existing aircraft electrical system 30 and alert system 32.

The smoke detector system 20 generally includes a housing 38, the oxygen sensor 22, the pressure sensor 24, the smoke detector sensor 26, the light source 28, and the common electrical interface 34. The housing 38, in one non-limiting embodiment, contains the drive electronics 44 (illustrated schematically) therefor, as well as the respective wiring harnesses 44W (illustrated schematically) which connect to the common electrical interface 34. It should be understood that the drive electronics 44 and wire harnesses 44W may be integrated in various combinations. That is, the oxygen sensor 22, the pressure sensor 24, the light source 28, and the smoke detector sensor 26 may operate autonomously but may alternatively share power, communications etc. from a common printed circuit board.

The smoke detector system 20 may be arranged at upper elevations within the cargo bay 12 where the buoyancy differences between ambient air and heated air or smoke are readily identifiable and where the light source 28 provides effective illumination. That is, the cargo bay liner 16 is located in an upper surface of the aircraft cargo bay 12. Heated air or smoke generally tend to rise quickly to upper elevations and would therefore be detected by the elevated positions of the smoke detector sensor 26. It should be understood that other detectors may be provide herewith.

The smoke detector sensor 26 may include an ionization or photoelectric type sensor. The oxygen sensor 22 may include an clectz-ocheznical or ceramic oxide such as a zirconia type sensor, although other types of sensors may alternatively or additionally be used. Zirconia type sensors intrinsically operate at an elevated temperature and this advantageously generates air convection currents, which will draw smoke towards the smoke detector sensor 26 and increase the fidelity thereof and will reduce boundary layer dead zones typical of cargo bays, such as cargo bay 12. That is, convection currents are formed around the smoke detector system 20 which entrains air to be sampled and improving detection speed. The oxygen sensor 22 operates to detect the oxygen concentration within the cargo bay 12 for use by a controller 50 of a fire suppression system 52 to maintain oxygen concentrations below a level supporting combustion with a fire suppressant release system 54. As an example, the controller 50 may initially cause the release of a first inert gas fire suppressant in response to a fire threat signal to reduce an oxygen concentration within the cargo bay 12 below a predetermined threshold. Once the oxygen concentration is below the threshold, the controller 50 may cause the release of a second inert gas fire suppressant to the cargo bay 12 to facilitate maintaining the oxygen concentration below the predetermined threshold. In one example, the predetermined threshold may be less than a 13% oxygen concentration level, such as 12% oxygen concentration, within the cargo bay 12. A premise of setting the threshold below 12% is that ignition of aerosol substances, which may be found in passenger cargo in the cargo bay 12, is limited (or in some cases prevented) below 12% oxygen concentration. As an example, the threshold may be established based on cold discharge (i.e., no fire case) of the first and second inert fire suppressants in an empty cargo bay 12 with the aircraft 10 grounded and at sea level air pressure. For further understanding of other aspects of the fire suppressant release system and associated components thereof, attention is directed to United States Patent Application No. 12147081'7, entitled FIRE SUPPRESSION SYSTEM AND METHOD, which is assigned to the assignee of the instant invention and which is hereby incorporated by reference herein in its entirety.

The pressure sensor 24 may be utilized to monitor / limit the differential pressure between the interior of the cargo bay 12 and the exterior of the cargo bay 12 during fire suppz-essant release so as to prevent potential structural damage to the aircraft. The pressure sensor 24 (or optionally, temperature) within the cargo bay 12 provides a feedback to the controller 50. Pressure and optionally temperature feedback may be used to monitor a status (i.e., readiness "prognostics") within the cargo bay 12 to facilitate determination of the release timing, rate of discharge, effect throughout the cargo bay 12 to control operation of the fire suppression system 52. That is, the oxygen sensor 22 and pressure sensor 24 measure partial pressure of oxygen and may require compensation to convert to volumetric concentration. Dalton's law states that the total pressure of a mixture of ideal gasses is equal to the sum of the partial pressures of the individual gases. As such, the pressure sensor 24 may measure the total atmospheric pressure and humidity may also be measure to provide a dry gas equivalent volumetric concentration. Measurement of water vapor pressure may thereby also utilize a relative humidity sensor 56 and a temperature sensor 58 which also communicate with the control 50. The inclusion of oxygen sensor 22 in the smoke detector system 20 as part of an inert gas fire suppressant control loop results in reduced aircraft wiring, reduced weight, and reduced aircraft system costs. The smoke detector system 20 also facilitates installation at aircraft manufacture and results in fewer maintenance procedures and associated costs once fielded. Cargo bay liner 16 manufacturing will also be simplified and costs will be reduced as the independent mounting provisions and wiring will not be required.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A smoke detector system (20) comprising:
a housing (3 8);
a smoke detector sensor (26) mounted to said housing (38); and
an oxygen sensor (22) mounted to said housing (38); **characterised in that**
the oxygen sensor (22) is adjacent to the smoke detector sensor and operates at elevated temperatures so as in use to generate air convection currents for drawing smoke towards the smoke detector sensor (26).

2. The smoke detector system as recited in claim 1, further comprising an electrical interface (34) mounted to said housing (38), said electrical interface (34) in communication with said smoke detector sensor (26) and said oxygen sensor (38).

3. The smoke detector system as recited in claim 2, further comprising a controller (50) in communication with said electrical interface (34).

4. The smoke detector system as recited in claim 3, further comprising a fire suppression system (52) in communication with said controller (50), said controller (50) operable to control said fire suppression system (52) in response to said smoke detector (26) and said oxygen sensor (28).

5. The smoke detector system as recited in claim 2, 3 or 4, further comprising a pressure sensor (24) mounted to said housing (38), said electrical interface (34) in electrical communication with said pressure sensor (24).

6. The smoke detector system as recited in claim 5 when dependent on claim 4 wherein said controller (50) is operable to control said fire suppression system (52) in response to said pressure sensor (24).

7. The smoke detector system as recited in any of claims 2 to 6, further comprising a light source (28) mounted to said housing (38), said electrical interface (34) in electrical communication with said light source (24).

8. The smoke detector system as recited in any of claims 2 to 7, further comprising a relative humidity sensor (56) mounted to said housing (38), said electrical interface (34) in electrical communication with said relative humidity sensor (56).

9. The smoke detector system as recited in any of claims 2 to 8, further comprising a temperature sensor (58) mounted to said housing (38), said electrical interface (34) in electrical communication with said temperature sensor (58).

10. A fire suppressant system comprising:
a smoke detector system having a smoke detector sensor (26) and an oxygen sensor (22) mounted within a housing (38);
a fire suppressant release system (52); and
a controller (50) in communication with said smoke detector system, said controller (50) operable to control said fire suppression system in response to said smoke detector (26) and said oxygen sensor (22); **characterised in that**
the oxygen sensor (22) is adjacent to the smoke detector sensor and operates at elevated temperatures so as in use to generate air convection currents for drawing smoke towards the smoke detector sensor (26).

11. The fire suppressant system as recited in claim 10, wherein said smoke detector system includes a multiple of housings (38), each of which include a smoke detector sensor (26) and an oxygen sensor (22).

12. The fire suppressant system as recited in claim 11, wherein said multiple of housing (38) are mounted within a cargo bay liner (16), said cargo bay liner optionally being located in an upper surface of the aircraft cargo bay (12).

13. The fire suppressant system as recited in claim 10, 11 or 12, further comprising a temperature sensor (58) and/or a relative humidity sensor (56) mounted to said housing, said controller (50) in electrical communication with said temperature sensor (58), and/or said relative humidity sensor (56).

14. A method of smoke detection comprising:
locating a smoke detector sensor (26) adjacent to an oxygen sensor (22); and
generating air convection currents with the oxygen sensor (22) to draw smoke towards the smoke detector sensor (26), the oxygen sensor (22) operating at elevated temperatures to generate the air convection currents.

15. The method as recited in claim 14, wherein the air convection currents are generated within a cargo bay (12).

## Patentansprüche

1. Rauchmeldersystem (20), aufweisend:
ein Gehäuse (38);
einen Rauchmeldersensor (26), der an dem Gehäuse (38) angebracht ist; und
einen Sauerstoffsensor (22), der an dem Gehäuse (38) angebracht ist;
**dadurch gekennzeichnet,**
**dass** der Sauerstoffsensor (22) benachbart dem Rauchmeldersensor (26) vorgesehen ist und bei höheren Temperaturen arbeitet, um im Betrieb Luftkonvektionsströme zu erzeugen und dadurch Rauch in Richtung auf den Rauchmeldersensor (26) zu ziehen.

2. Rauchmeldersystem nach Anspruch 1,
das ferner eine elektrische Schnittstelle (34) aufweist, die an dem Gehäuse (38) angebracht ist, wobei die elektrische Schnittstelle (34) mit dem Rauchmeldersensor (26) und dem Sauerstoffsensor (38) in Kommunikation steht.

3. Rauchmeldersystem nach Anspruch 2,
das ferner eine Steuerung (50) in Kommunikation mit der elektrischen Schnittstelle (34) aufweist.

4. Rauchmeldersystem nach Anspruch 3,
das ferner ein Feuerunterdrückungssystem (52) in Kommunikation mit der Steuerung (50) aufweist, wobei die Steuerung (50) betriebsmäßig dazu ausgebildet ist, das Feuerunterdrückungssystem (52) ansprechend auf den Rauchmelder (26) und den Sauerstoffsensor (28) zu steuern.

5. Rauchmeldersystem nach Anspruch 2, 3 oder 4,
das ferner einen an dem Gehäuse (38) angebrachten Drucksensor (24) aufweist, wobei die elektrische Schnittstelle (34) in elektrischer Verbindung mit dem Drucksensor (24) steht.

6. Rauchmeldersystem nach Anspruch 5 bei Abhängigkeit von Anspruch 4, wobei die Steuerung (50) betriebsmäßig dazu ausgebildet ist, das Feuerunterdrückungssystem (52) ansprechend auf den Drucksensor (24) zu steuern.

7. Rauchmeldersystem nach einem der Ansprüche 2 bis 6,
das ferner eine an dem Gehäuse (38) angebrachte Lichtquelle (28) aufweist, wobei die elektrische Schnittstelle (34) in elektrischer Verbindung mit der Lichtquelle (24) steht.

8. Rauchmeldersystem nach einem der Ansprüche 2 bis 7,
das ferner einen an dem Gehäuse (38) angebrachten Sensor (56) für relative Feuchtigkeit (56) aufweist, wobei die elektrische Schnittstelle (34) in elektrischer Verbindung mit dem Sensor (56) für relative Feuchtigkeit steht.

9. Rauchmeldersystem nach einem der Ansprüche 2 bis 8,
das ferner einen an dem Gehäuse (38) angebrachten Temperatursensor (58) aufweist, wobei die elektrische Schnittstelle (34) in elektrischer Verbindung mit dem Temperatursensor (58) steht.

10. Feuerunterdrückungssystem, aufweisend:
ein Rauchmeldersystem, das einen Rauchmeldersensor (26) und ein Sauerstoffsensor (22) aufweist, die in einem Gehäuse (38) angebracht sind;
ein Feuerunterdrückungsmittel-Freigabesystem (52); und
eine Steuerung (50) in Kommunikation mit dem Rauchmeldersystem,
wobei die Steuerung (50) betriebsmäßig dazu ausgebildet ist, das Feuerunterdrückungssystem ansprechend auf den Rauchmelder (26) und den Sauerstoffsensor (22) zu steuern;
**dadurch gekennzeichnet,**
**dass** der Sauerstoffsensor (22) benachbart dem Rauchmeldersensor vorgesehen ist und bei höheren Temperaturen arbeitet, um im Betrieb Luftkonvektionsströme zu erzeugen und dadurch Rauch in Richtung auf den Rauchmeldersensor (26) zu ziehen.

11. Feuerunterdrückungssystem nach Anspruch 10,
wobei das Rauchmeldersystem eine Mehrzahl von Gehäusen (38) aufweist, von denen jedes einen Rauchmeldersensor (26) und einen Sauerstoffsensor (22) aufweist.

12. Feuerunterdrückungssystem nach Anspruch 11,
wobei die mehreren Gehäuse (38) innerhalb einer Gepäckraum-Verkleidung (16) angebracht sind, wobei sich die Gepäckraum-Verkleidung optional in einer oberen Oberfläche des Flugzeug-Gepäckraums (12) befindet.

13. Feuerunterdrückungssystem nach Anspruch 10, 11 oder 12,
weiterhin aufweisend einen Temperatursensor (58) und/oder einen Sensor (56) für relative Feuchtigkeit, die an dem Gehäuse angebracht sind, wobei die Steuerung (50) in elektrischer Verbindung mit dem Temperatursensor (58) und/oder dem Sensor (56) für relative Feuchtigkeit steht.

14. Rauchdetektionsverfahren, das folgende Schritte aufweist:
Anordnen eines Rauchmeldersensors (26) benachbart einem Sauerstoffsensor (22); und
Erzeugen von Luftkonvektionsströmen mit dem Sauerstoffsensor (22), um Rauch in Richtung auf den Rauchmeldersensor (26) zu ziehen, wobei der Sauerstoffsensor (22) bei höheren Temperaturen arbeitet, um die Luftkonvektionsströme zu erzeugen.

15. Verfahren nach Anspruch 14,
wobei die Luftkonvektionsströme innerhalb eines Gepäckraums (12) erzeugt werden.

## Revendications

1. Système détecteur de fumée (20), comprenant :
un boîtier (38) ;
un capteur détecteur de fumée (26) monté sur ledit boîtier (38) ; et
un capteur d'oxygène (22) monté sur ledit boîtier (38) ;
**caractérisé en ce que**
le capteur d'oxygène (22) est adjacent au capteur détecteur de fumée et fonctionne à des températures élevées de manière à générer, en service, des courants de convection d'air pour entraîner la fumée vers le capteur détecteur de fumée (26).

2. Système détecteur de fumée selon la revendication 1, comprenant en outre une interface électrique (34) montée sur ledit boîtier (38), ladite interface électrique (34) communiquant avec ledit capteur détecteur de fumée (26) et ledit capteur d'oxygène (38).

3. Système détecteur de fumée selon la revendication 2, comprenant en outre une unité de commande (50) en communication avec ladite interface électrique (34).

4. Système détecteur de fumée selon la revendication 3, comprenant en outre un système extincteur d'incendie (52) en communication avec ladite unité de commande (50), ladite unité de commande (50) étant apte à commander ledit système extincteur d'incendie (52) en réponse audit détecteur de fumée (26) et audit capteur d'oxygène (28).

5. Système détecteur de fumée selon la revendication 2, 3 ou 4, comprenant en outre un capteur de pression (24) monté sur ledit boîtier (38), ladite interface électrique (34) étant en communication électrique avec ledit capteur de pression (24).

6. Système détecteur de fumée selon la revendication 5 lorsque celle-ci dépend de la revendication 4, dans lequel ladite unité de commande (50) est apte à commander ledit système extincteur d'incendie (52) en réponse audit capteur de pression (24).

7. Système détecteur de fumée selon l'une quelconque des revendications 2 à 6, comprenant en outre une source de lumière (28) montée sur ledit boîtier (38), ladite interface électrique (34) étant en communication électrique avec ladite source de lumière (24).

8. Système détecteur de fumée selon l'une quelconque des revendications 2 à 7, comprenant en outre un capteur d'humidité relative (56) monté sur ledit boîtier (38), ladite interface électrique (34) étant en communication électrique avec ledit capteur d'humidité relative (56).

9. Système détecteur de fumée selon l'une quelconque des revendications 2 à 8, comprenant en outre un capteur de température (58) monté sur ledit boîtier (38), ladite interface électrique (34) étant en communication électrique avec ledit capteur de température (58).

10. Système extincteur d'incendie, comprenant :
un système détecteur de fumée comportant un capteur détecteur de fumée (26) et un capteur d'oxygène (22) montés dans un boîtier (38) ;
un système de diffusion d'agent extincteur d'incendie (52) ; et
une unité de commande (50) en communication avec ledit système détecteur de fumée, ladite unité de commande (50) étant apte à commander ledit système extincteur d'incendie en réponse audit capteur détecteur de fumée (26) et audit capteur d'oxygène (22) ;
**caractérisé en ce que**
le capteur d'oxygène (22) est adjacent au capteur détecteur de fumée et fonctionne à des températures élevées de manière à générer, en service, des courants de convection d'air pour entraîner la fumée vers le capteur détecteur de fumée (26).

11. Système extincteur d'incendie selon la revendication 10, dans lequel ledit système détecteur de fumée comporte une pluralité de boîtiers (38), chacun desquels comporte un capteur détecteur de fumée (26) et un capteur d'oxygène (22).

12. Système extincteur d'incendie selon la revendication 11, dans lequel ladite pluralité de boîtiers (38) sont montés dans un revêtement (16) de soute, ledit revêtement de soute étant éventuellement placé dans une surface supérieure de la soute (12) d'un aéronef.

13. Système extincteur d'incendie selon la revendication 10, 11 ou 12, comprenant en outre un capteur de température (58) et/ou un capteur d'humidité relative (56) montés/monté sur ledit boîtier, ladite unité de commande (50) étant en communication électrique avec ledit capteur de température (58) et/ou ledit capteur d'humidité relative (56).

14. Procédé de détection de fumée, comprenant les étapes consistant à :
placer un capteur détecteur de fumée (26) en position adjacente à un capteur d'oxygène (22) ; et
générer des courants de convection d'air au moyen du capteur d'oxygène (22) pour entraîner la fumée vers le capteur détecteur de fumée (26), le capteur d'oxygène (22) fonctionnant à des températures élevées pour générer les courants de convection d'air.

15. Procédé selon la revendication 14, dans lequel les courants de convection d'air sont générés au sein d'une soute (12).
